# EUROPÄISCHE PATENTSCHRIFT

(11) **EP 3 168 701 B1**
(45) Veröffentlichungstag und Bekanntmachung des Hinweises auf die Patenterteilung: **25.08.2021**
(21) Anmeldenummer: 16198753.2
(22) Anmeldetag: 14.11.2016
(51) Int. Cl.: G05B 19/4069

(54) **VERFAHREN ZUR DARSTELLUNG DER BEARBEITUNG IN EINER WERKZEUGMASCHINE**
METHOD FOR REPRESENTING THE PROCESSING IN A MACHINE TOOL
PROCÉDÉ DE REPRÉSENTATION DE L'USINAGE DANS UNE MACHINE-OUTIL

(30) Priorität: 16.11.2015 DE 102015119806
(43) Veröffentlichungstag der Anmeldung: 17.05.2017
(73) Patentinhaber: Grob-Werke GmbH & Co. KG, 87719 Mindelheim (DE)
(72) Erfinder: Kormann, Benjamin, 87719 Mindelheim (DE)
(74) Vertreter: Patentanwälte Olbricht, Buchold, Keulertz Partnerschaft mbB

(56) Entgegenhaltungen:
- EP-A1- 2 216 697
- DE-A1-102006 059 819
- DE-A1-102008 046 621
- DE-A1-102009 017 795
- DE-A1-102009 029 064
- US-A- 5 564 872

## Beschreibung

Die Erfindung betrifft ein Verfahren zur Darstellung der Bearbeitungsabläufe im Bearbeitungsraum einer Werkzeugmaschine, eine Werkzeugmaschine sowie ein System.

Werkzeugmaschinen dienen typischerweise der Bearbeitung von Werkstücken mittels geeigneter Werkzeuge. Dabei können beispielsweise Bearbeitungsverfahren wie Bohren oder Fräsen verwendet werden.

Werkzeugmaschinen haben häufig einen Bearbeitungsraum, in welchem sich eine Spannvorrichtung zum Halten des Werkstücks befindet. Das Werkstück kann dann insbesondere bearbeitet werden, während es in der Spannvorrichtung eingespannt ist und/oder sich in dem Bearbeitungsraum befindet. Der Bearbeitungsraum kann umschlossen sein, kann jedoch auch offen sein.
Aus der DE 10 2009 017795 A1 ist ein Verfahren zur Darstellung von Bearbeitungsabläufen in einem Bearbeitungsraum einer Werkzeugmaschine bekannt, um ein NC-Programm ohne reale Bearbeitung zu überprüfen. In dem Bearbeitungsraum findet eine Bearbeitung eines Werkstücks mittels eines Werkzeugs durch Bewegung des Werkzeugs relativ zum Werkstück statt. Zur Abbildung vom Werkstück wird eine 2D-Kamera verwendet, wobei die Kameradaten in einem Speicher abgelegt werden. Zunächst wird die Bewegung der Werkzeugmaschine ohne montiertes Werkstück durchgeführt. Rein virtuelle 3D-Bilder des Werkstücks werden nach jedem Bewegungsbefehl des NC-Programms entsprechend den realen Bewegungen der Maschine aktualisiert. Die bei der Arbeitsvorgangssimulation ebenfalls durch die 2D-Kamera erfassten reale Bilder werden mit den virtuellen Bildern überlagert, wobei dem Bediener diese Überlagerung angezeigt wird. Nachteilig ist jedoch, dass es sich nicht um eine reale Bearbeitung handelt, sondern um eine Arbeitsvorgangssimulation, bei der entweder das Werkstück, das Werkzeug oder beides überhaupt nicht vorhanden ist. Die durch die Kamera erfassten realen Bilder werden bei der Arbeitsvorgangssimulation nicht an die Lageänderungen angepasst. Dies ist dem offenbarten Verfahren deshalb möglich, weil dort eine reine Simulation ohne eine reale Bearbeitung durchgeführt wird. Das dort offenbarte Verfahren eignet sich jedoch nicht zur Abbildung eines realen und tatsächlich vorhandenen Bearbeitungszustandes, da die 2D-Kamera aufgrund von Kühlschmierstoffen keine Bilder liefern kann.
Auch der DE 10 2006 059819 A1 und der DE 10 2009 029064 A1 sind jeweils Verfahren zur Darstellung von Bearbeitungsabläufen in einem Bearbeitungsraum einer Werkzeugmaschine bekannt.

Im Zuge einer weiteren Automatisierung von Bearbeitungsvorgängen hat es sich gezeigt, dass es günstig wäre, eine bessere Überwachung und Steuerung zu ermöglichen.

Die Erfindung hat es sich zur Aufgabe gemacht, diesen bekannten Stand der Technik zu verbessern.

Dies wird erfindungsgemäß durch ein Verfahren mit den Merkmalen des Anspruchs 1, erreicht. Vorteilhafte Ausgestaltungen sind beispielsweise in den jeweiligen Unteransprüchen beansprucht.

Die Erfindung betrifft insbesondere ein Verfahren zur Darstellung der Bearbeitungsabläufe im Bearbeitungsraum einer Werkzeugmaschine, in welchem eine Bearbeitung eines Werkstücks mittels eines Werkzeugs durch Bewegung des Werkzeugs relativ zum Werkstück erfolgt. Vor Bearbeitungsbeginn scannt eine Scaneinheit zumindest das Werkstück und/oder das Werkzeug ab und hiervon wird ein dreidimensionales Datenmodell erstellt. Das Modell wird in einem Speicher gespeichert und während der Bearbeitung des Werkstücks, welche einhergeht mit einer relativen Lageänderung von Werkstück und Werkzeug, wird/werden die jeweilige/n Lageinformation/en von Werkstück und/oder Werkzeug kontinuierlich einer Bilddatenaufbereitungseinheit zugeleitet. Die Bilddatenaufbereitungseinheit aktualisiert das dreidimensionale Datenmodell aus dem Speicher kontinuierlich mit den Lageinformation/en und das so aktualisierte, virtuelle Bild von Werkstück und/oder Werkzeug wird auf einer Anzeigeeinheit anzeigt.

Das erfindungsgemäße Verfahren erlaubt eine besonders vorteilhafte Visualisierung des Bearbeitungsprozesses, welcher in einer Werkzeugmaschine vor sich geht, so dass eine besonders umfangreiche und anschauliche Überwachung der Bearbeitung durch einen Bediener möglich ist. Dies erlaubt auch schnelle und zielgerichtete Eingriffe, wobei etwaig auftretende Probleme zügig erkannt werden können und der Bearbeitungsprozess entsprechend korrigiert werden kann. Beispielsweise kann erkannt werden, wenn sich ein Werkzeug an einer Position befindet, an welcher ein Eingreifen am Werkstück zu einer falschen Bearbeitung führen würde. Dann kann beispielsweise durch geeignete Eingaben oder eine Not-Aus-Funktion die Bearbeitung gestoppt werden, was teure Bearbeitungsfehler vermeiden hilft.

Bei der Bearbeitung kann es sich insbesondere um eine spanende Bearbeitung wie beispielsweise Fräsen oder Bohren handeln.

Das dreidimensionale Datenmodell kann beispielsweise Konturen, Flächen oder Ränder des Werkstücks und/oder des Werkzeugs darstellen, welche durch Scannen ermittelt wurden. Sofern nur eines von Werkstück und Werkzeugs durch Scannen ermittelt wurde, wird auf vorhandene Daten zur Kontur oder sonstigen Eigenschaften des jeweils nicht abgescannten Gegenstandes von Werkstück oder Werkzeug zurückgegriffen. Somit ist auch eine Kombination dieser beiden Vorgehensweisen möglich.

Grundsätzlich kann es sich bei dem Datenmodell sowohl um ein Vektormodell wie auch um ein Pixelmodell handeln. Damit können das Werkstück, das Werkzeug sowie eventuell auch weitere Werkstücke und/oder weitere Werkzeuge oder auch weitere Elemente wie Konturen des Bearbeitungsraums oder andere Einrichtungen im Bearbeitungsraum wie Halter oder Spannvorrichtungen dargestellt werden.

Die Lageinformationen können grundsätzlich gemessen werden oder können auch anhand von Daten gewonnen werden, welche die Bearbeitung steuern, beispielsweise NC-Daten bzw. NC-Programme. Mit NC-Programmen kann beispielsweise die relative Bewegung zwischen Werkstück und Werkzeug gesteuert werden. Sofern sich eine gesteuerte Einheit wie beispielsweise ein Bewegungsantrieb an das Programm hält, ist auch die Veränderung der Lage des Werkzeugs und/oder des Werkstücks bekannt.

Unter einer Aktualisierung des dreidimensionalen Datenmodells kann insbesondere verstanden werden, dass Positionsänderungen des Werkzeugs und/oder des Werkstücks in das Datenmodell übernommen werden sowie dass eine Bearbeitung des Werkstücks durch das Werkzeug in dem dreidimensionalen Datenmodell berücksichtigt wird, beispielsweise durch Veränderung der Kontur des Werkstücks. Gegebenenfalls kann auch eine Veränderung des Werkzeugs, beispielsweise durch Abnutzung, entsprechend berücksichtigt werden.

Der erfindungsgemäße Vorschlag erreicht, dass nun auch während der Bearbeitung, wo unter Umständen eine visuelle Kontrolle aufgrund des eingesetzten Kühl- und Schmiermittels nicht möglich ist, diese über die Darstellung an dem Bildschirm überwacht und kontrolliert werden kann.

Da ein dreidimensionales Datenmodell zur Verfügung steht, die Bewegungsdaten in Echtzeit aktualisiert werden, ist ein wirklichkeitsgetreuer Ablauf am Bildschirm beobachtbar und dabei kann auch die Blickrichtung auf die Bearbeitung innerhalb des Datenmodells beliebig gewählt werden, was den Komfort und die Bearbeitungsqualität erheblich verbessert und Ausschuss vermeidet.

Auch ist mit dem erfindungsgemäßen Vorschlag in einfacher Weise eine Kollisionsüberwachung möglich, da ja die konkreten realen Konturen mit den realen Bearbeitungsbewegungen verrechnet und dargestellt werden. Ohne den Einsatz des erfindungsgemäßen Vorschlages würde ein zum Beispiel falsch vorbereitetes Werkstück, dass eine Störkontur aufweist, unentdeckt bleiben und so zu einem erheblichen Maschinenschaden führen können!

Das Bild wird basierend auf dem Datenmodell erzeugt. Das Bild stellt dabei vorteilhaft eine graphische Wiedergabe des Datenmodells, insbesondere des Werkstücks und des Werkzeugs aus dem Datenmodell, dar. Das Bild kann ein übliches zweidimensionales Bild sein, welches auf üblichen Bildschirmen wiedergegeben werden kann. Das Bild kann jedoch auch ein dreidimensionales Bild sein, welche beispielsweise auf 3D-Bildschirmen angezeigt werden kann. Dementsprechend kann die Anzeigeeinheit beispielsweise als üblicher, zweidimensionaler Bildschirm oder auch als 3D-Bildschirm ausgeführt sein.

Das Abscannen des Werkstücks und/oder Werkzeugs erfolgt in einer nicht von den Ansprüchen erfassten Ausführung beispielsweise in Richtung des Bearbeitungsflusses vor oder in dem Bearbeitungsraum. Durch ein Abscannen vor dem Bearbeitungsraum kann darauf verzichtet werden, die Scaneinheit im Bearbeitungsraum zu positionieren, was beispielsweise eine weniger robuste und damit preiswertere Ausführung der Scaneinheit ermöglicht. Durch ein Abscannen im Bearbeitungsraum kann beispielsweise eine vorteilhafte Überwachung während eines Bearbeitungsvorgangs realisiert werden, wobei die Scaneinheit nicht durch Fenster oder ähnliche Einrichtungen hindurch misst, was die Messgenauigkeit verbessert.

Geschickter Weise ist in einer nicht von den Ansprüchen erfassten Ausführung eine Maschinensteuerung, die durch das Einwirken auf mindestens einen Antrieb eine Lageveränderung des Werkstücks relativ zum Werkzeug verursacht, vorgesehen, wobei die Maschinensteuerung Lageinformation/en an den mindestens einen Antrieb übermittelt und diese Lageinformation/en auch der Bilddatenaufbereitungseinheit zugeleitet wird/werden. Damit kann beispielsweise ein Abgleich von gescannten Daten mit einem erwarteten Verhalten erfolgen, welches aus den Lageinformationen bestimmt werden kann. Außerdem kann beispielsweise anhand der Lageinformationen ermittelt werden, welche Bereiche eines Werkstücks oder Werkzeugs besonderer Aufmerksamkeit bedürfen, beispielsweise aufgrund einer Gefahr einer Beschädigung oder Falschbearbeitung, und es kann beispielsweise die Anzeige entsprechend angepasst werden. Dies kann die Bedienbarkeit erheblich verbessern.

Es sei verstanden, dass grundsätzlich das Werkzeug, das Werkstück oder beide bewegt werden können. Dafür kann beispielsweise vorteilhaft ein jeweiliger Bewegungsantrieb vorgesehen sein. Werkstück oder Werkzeug können auch in einer festen Halterung fixiert werden, insbesondere wenn das jeweils andere Element bewegt wird.

Gemäß einer bevorzugten Ausführung ist zumindest ein Lagesensor für die Erfassung der jeweiligen Lage von Werkstück und/oder Werkzeug vorgesehen, welcher die jeweilige/n Lageinformation/en ermittelt und kontinuierlich der Bilddatenaufbereitungseinheit zuleitet. Damit kann beispielsweise schon aufgrund der Lagen, bevorzugt auch unter Verwendung der jeweiligen Datenmodelle, auf etwaige Probleme geschlossen werden. Beispielsweise kann eine Überwachung dahingehend erfolgen, ob es zu unbeabsichtigten Berührungen oder Kollisionen zwischen Werkstück und Werkzeug kommt. Die Gefahr derartiger Kollisionen kann beispielsweise angezeigt werden, so dass ein Benutzer entsprechend reagieren kann. Es kann auch selbständig eine Unterbrechung oder ein Abbruch der Bearbeitung eingeleitet werden, um Beschädigungen zu vermeiden. Außerdem kann durch die Lageinformationen auch die Anzeige beeinflusst, beispielsweise optimiert werden.

Vorzugsweise ist an der Anzeigeeinheit auswählbar, aus welcher Blickrichtung und/oder in welcher Schnittebene das virtuelle Bild angezeigt werden soll, wobei die Bilddatenaufbereitungseinheit aus dieser Auswahlinformation das Datenmodell entsprechend aufbereitet und auf der Anzeigeeinheit anzeigt. Beispielsweise kann hierfür eine 3D-Maus oder ein sonstiges zumindest dreidimensionales, bevorzugt sechsdimensionales Eingabegerät verwendet werden. Der Benutzer kann damit in vorteilhafter Weise auswählen, welchen Teil der Werkstücks und/oder des Werkzeugs er sehen möchte.

Die Scaneinheit kann in einer nicht von den Ansprüchen erfassten Ausführung insbesondere an dem Werkzeugträger der Werkzeugmaschine angeordnet sein, und kann auch während der Bearbeitung im Bearbeitungsraum verbleiben. Dies erlaubt eine besonders nahe und damit exakte Erfassung des Werkstücks oder des Werkzeugs. Die Anordnung an dem Werkzeugträger ermöglicht typischerweise eine besonders stabile und trotzdem flexibel einstellbare Lage.

Alternativ kann die Scaneinheit aber auch an einem separaten Halter angeordnet sein. Dieser kann starr oder auch beweglich sein.

Die Scaneinheit kann in einer nicht von den Ansprüchen erfassten Ausführung insbesondere während der Bearbeitung durch eine Abdeckung geschützt werden. Damit können Beschädigungen der Scaneinheit beispielsweise durch herumfliegende Späne des Werkzeugs oder durch zur Unterstützung der Bearbeitung eingesetzte Flüssigkeiten vermieden werden. Es sei jedoch verstanden, dass die Scaneinheit auch derart ausgebildet sein kann, dass sie ohne Abdeckung auch während der Bearbeitung in dem Bearbeitungsraum verbleiben kann. Dann kann insbesondere auf eine separate Abdeckung verzichtet werden.

Gemäß einer Weiterbildung ist vorgesehen, dass neben der aktuellen Situation im Bearbeitungsraum auf der Anzeigeeinheit eine zu einem in der Zukunft liegenden Zukunftszeitpunkt stattfindende Situation im Bearbeitungsraum durch Auswahl darstellbar ist. In diesem Modus können insbesondere der/die jeweilige/n aktuelle/n Geschwindigkeitsvektor/en des/der im Bearbeitungsraum bewegten Elemente/s ermittelt werden. Hieraus kann für den Zukunftszeitpunkt aus dem Datenmodell eine zukünftige Situation ermittelt und auf der Anzeigeeinheit angezeigt werden. Dies erlaubt eine prädiktive Kontrolle, wobei bereits in der Zukunft liegende mögliche Probleme vorausgesehen werden können und in die Bearbeitung entsprechend eingegriffen werden kann. Es kann beispielsweise für den Benutzer einstellbar sein, wie weit im Voraus die entsprechende Konstellation, insbesondere aus Werkstück und Werkzeug, angezeigt werden soll. Erkennt der Benutzer beispielsweise eine zu erwartende unerwünschte Bearbeitung, so kann er den Bearbeitungsvorgang rechtzeitig stoppen oder ändern.

Als Werkzeugmaschine ist bevorzugt eine spanabhebende Werkzeugmaschine vorgesehen, welche eine Motorspindel aufweist. Die Motorspindel kann insbesondere dazu ausgebildet sein, ein Werkzeug für einen zumindest rotativen Antrieb aufzunehmen. Die Motorspindel kann auch zur Aufnahme einer Scaneinheit ausgebildet sein, wobei die Scaneinheit insbesondere bei Rotation und/oder Bewegung der Motorspindel scannt. Damit kann beispielsweise erreicht werden, dass die Scaneinheit nur dann scannt, wenn sich ihr Blickfeld geändert hat oder sich sonst etwas im Bearbeitungsraum bewegt hat. Unnötige Scans, welche Energie verbrauchen sowie Datenspeicher- und Datenübertragungskapazität belegen, jedoch keine zusätzliche Information liefern, können auf diese Weise vorteilhaft verhindert werden.

Bevorzugt ist in einer nicht von den Ansprüchen erfassten Ausführung vorgesehen, dass die Scaneinheit den Bearbeitungsraum einscannt, bevor oder nachdem das Werkstück in den Bearbeitungsraum transportiert wird. Durch ein Einscannen bevor das Werkstück in den Bearbeitungsraum transportiert wird kann insbesondere der Bearbeitungsraum vermessen werden, ohne dass das Werkstück als störendes, die Sicht behinderndes Element auftritt. Entsprechende Daten können beispielsweise als Referenz verwendet werden. Durch ein Einscannen nachdem das Werkstück in den Bearbeitungsraum transportiert wurde kann das Werkstück im Kontext des Bearbeitungsraums vermessen werden.

Die Offenbarung betrifft des Weiteren eine Werkzeugmaschine für die insbesondere spanabhebende Bearbeitung eines Werkstücks durch ein Werkzeug. Dabei erfolgt in einem Bearbeitungsraum durch mindestens einen Bewegungsantrieb eine Bewegung des Werkzeugs relativ zum Werkstück. Außerdem ist eine Scaneinheit vorgesehen, welche zumindest das Werkstück und/oder das Werkzeug abscannt und hiervon ein dreidimensionales Datenmodell erstellt. Außerdem ist ein Speicher zum Speichern des Datenmodells vorgesehen. Ferner ist eine Bilddatenaufbereitungseinheit vorgesehen, welche während der Bearbeitung kontinuierlich die jeweilige/n Lageinformation/en von Werkstück und/oder Werkzeug erhält. Die Bilddatenaufbereitungseinheit aktualisiert das dreidimensionale Datenmodell aus dem Speicher kontinuierlich mit den Lageinformation/en. Das so aktualisierte, virtuelle Bild von Werkstück und/oder Werkzeug wird auf einer Anzeigeeinheit anzeigt.

Mittels der offenbarten Werkzeugmaschine können ebenfalls die bereits mit Bezug auf das erfindungsgemäße Verfahren erwähnten Vorteile erreicht werden. Insbesondere wird eine erhebliche Verbesserung bei der Überwachung eines Bearbeitungsvorgangs erreicht, welche zu einer deutlichen Verringerung von Bearbeitungsfehlern führt.

Geschickter Weise ist in einer nicht von den Ansprüchen erfassten Ausführung vorgesehen, dass die Scaneinheit im Bearbeitungsraum oder an der Werkzeugmaschine, in Richtung des Bearbeitungsflusses vor dem Bearbeitungsraum angeordnet ist. Die Anordnung im Bearbeitungsraum ermöglicht dabei ein direktes Abscannen während der Bearbeitung ohne eventuell störende Fenster oder ähnliches. Die Anordnung vor dem Bearbeitungsraum ermöglicht ein Abscannen bereits vor dem Einbringen in den Bearbeitungsraum, so dass sichergestellt ist, dass die erforderlichen Daten vor dem Beginn der Bearbeitung zur Verfügung stehen. Außerdem kann die Scaneinheit in diesem Fall günstiger ausgeführt werden, da sie nicht den Bedingungen im Bearbeitungsraum wie herumfliegende Späne oder spritzende Flüssigkeit standhalten muss.

Gemäß einer Weiterbildung ist in einer nicht von den Ansprüchen erfassten Ausführung vorgesehen, dass die Scaneinheit im Bearbeitungsraum fest installiert ist. Dies erlaubt ein Abscannen auch während der Bearbeitung von fester Position aus, was die Datenverwaltung und Datenauswertung vereinfachen kann. Vorteilhaft ist dabei die Scaneinheit während der Bearbeitung im Bearbeitungsraum durch eine Abdeckung geschützt. Die Abdeckung kann beispielsweise bewegbar sei, so dass sie während der Bearbeitung in eine schützende Stellung bewegt werden kann und nach der Bearbeitung oder während einer Unterbrechung der Bearbeitung in eine nicht schützende Stellung bewegt werden kann. Dies ist insbesondere vorteilhaft, wenn die Scaneinheit nicht durch die Abdeckung hindurch scannen kann. Die Abdeckung kann insbesondere die Scaneinheit vor Einflüssen wie herumfliegenden Spänen oder Flüssigkeiten schützen, so dass die Scaneinheit einfacher und damit preiswerter ausgeführt werden kann. Es sei jedoch erwähnt, dass die Abdeckung auch so ausgeführt sein kann, dass die Scaneinheit durch die Abdeckung hindurch messen kann. Hierzu kann sie beispielsweise im optischen Wellenlängenbereich oder auch in einem anderen, beispielsweise im infraroten oder ultravioletten Wellenlängenbereich, transparent sein.

Die Scaneinheit kann in einer nicht von den Ansprüchen erfassten Ausführung insbesondere bei Bedarf auf den Werkzeugträger montier- oder einsetzbar sein, wobei der Werkzeugträger während der Bearbeitung das Werkzeug trägt. Damit kann auf einen separaten Halter für die Scaneinheit verzichtet werden, wobei gleichzeitig auf die typischerweise umfangreiche Beweglichkeit eines Werkzeugträgers zum Bewegen der Scaneinheit zurückgegriffen werden kann. Auch kann die Scaneinheit in ein häufig ohnehin vorhandenes System zum automatisierten Auswechseln von Werkzeugen mit einbezogen werden. Anders ausgedrückt kann die Scaneinheit in einem Magazin neben normalen Werkzeugen bevorratet werden und wie ein normales Werkzeug in den Werkzeugträger eingesetzt werden, wenn ein Abscannen erwünscht ist.

In einer nicht von den Ansprüchen erfassten Ausführung kann insbesondere während des Scannens eine zumindest teilweise kabellose Datenverbindung zwischen der Scaneinheit und dem Speicher vorgesehen sein. Damit kann auf Leitungen verzichtet werden, welche die Gefahr eines Verhedderns oder Abreißens mit sich bringen. Es sei jedoch erwähnt, dass grundsätzlich auch Leitungen verwendet werden können.

Zur Übermittlung von Daten zwischen der Scaneinheit und dem Speicher können in einer nicht von den Ansprüchen erfassten Ausführung insbesondere miteinander zusammenwirkende erste und zweite Kontaktflächen vorgesehen sein, wobei die erste Kontaktfläche bzw. die ersten Kontaktflächen an der in dem Werkzeugträger einsetzbaren Scaneinheit und die zweite Kontaktfläche bzw. die zweiten Kontaktflächen am Werkzeugträger vorgesehen ist/sind. Der Speicher kann dabei insbesondere mit der/den zweite/n Kontaktfläche/n leitend verbunden sein. Erste und zweite Kontaktflächen grenzen dabei bevorzugt unmittelbar aneinander, so dass eine elektrische Verbindung zwischen einer jeweiligen ersten Kontaktfläche und einer jeweiligen zweiten Kontaktfläche hergestellt wird, insbesondere wenn die Scaneinheit in dem Werkzeugträger aufgenommen ist.

Durch eine solche Ausführung wird erreicht, dass eine elektrische Verbindung, insbesondere zur Übertragung von Daten, auf einfache Weise hergestellt wird, wobei hierfür typischerweise ein normales Aufnehmen der Scaneinheit in den Werkzeugträger genügt. Dabei grenzen dann die Kontaktflächen aneinander. Auf aufwändige Steckverbinder oder drahtlose Übertragungstechniken kann vorteilhaft verzichtet werden.

Gemäß einer nicht von den Ansprüchen erfassten Weiterbildung sind zur Übermittlung von Energie zwischen der Scaneinheit und an oder in dem Werkzeugträger vorgesehenen Energiezuförderleitungen miteinander zusammenwirkende erste und zweite Kontaktflächen vorgesehen, wobei die erste Kontaktfläche bzw. die ersten Kontaktflächen an der in dem Werkzeugträger einsetzbaren Scaneinheit und die zweite Kontaktfläche bzw. die zweiten Kontaktflächen am Werkzeugträger vorgesehen ist/sind, und die Energiezuförderleitung mit der/den zweite/n Kontaktfläche/n leitend verbunden ist/sind. Damit werden für die Übertragung von Energie die gleichen Vorteile erreicht, welche weiter oben mit Bezug auf die Übertragung von Daten beschrieben wurden.

Gemäß einer offenbarten Ausführung ist an der Scaneinheit ein druckluftbetriebener Generator vorgesehen, der der Energieversorgung der Scaneinheit dient. Die in oder an den Werkzeugträger eingesetzte Scaneinheit ist dabei vorzugsweise derart mit einer Druckluftleitung verbunden oder verbindbar, dass die Druckluftversorgung der Werkzeugmaschine den Generator der Scaneinheit antreibt. Damit wird eine lokale Erzeugung von elektrischer Energie an der Scaneinheit ermöglicht, wobei lediglich Druckluft zugeführt zu werden braucht, welche in typischen Werkzeugmaschinen ohnehin vorhanden ist.

Vorzugsweise ist in einer nicht von den Ansprüchen erfassten Ausführung eine induktive Energie- und/oder Datenübertragung zwischen der Scaneinheit und einer Energiezuführungsleitung bzw. einer Datenleitung vorgesehen. Damit kann beispielsweise auf die beschriebenen Kontaktflächen verzichtet und stattdessen eine Induktive Übertragung von Energie und/oder Daten vorgesehen werden. Probleme mit eventuellen Verschmutzungen von Kontaktflächen können damit vermieden werden.

Für die Scaneinheit kann in einer nicht von den Ansprüchen erfassten Ausführung insbesondere ein Scaneinheitantrieb vorgesehen sein, der die Scaneinheit während des Scannens bewegt. Dies ermöglicht eine eigenständige Bewegung der Scaneinheit und das eventuelle Vorsehen eines erhöhten Bewegungsspielraums für die Scaneinheit, insbesondere im Vergleich zum Bewegungsspielraum von im Werkzeugträger befindlichen Werkzeugen. Alternativ oder zusätzlich kann auch vorgesehen sein, dass die Scaneinheit durch den Werkzeugträger bewegt wird. Dies erlaubt eine einfache Ausführung ohne zusätzliche Komponenten, wobei auf die typischerweise ohnehin vorhandene Beweglichkeit des Werkzeugträgers zurückgegriffen werden kann.

Gemäß jeweiliger nicht von den Ansprüchen erfassten Ausführungen kann die Scaneinheit als Streifenlicht-Scaneinheit, Linienscanner, Lasertriangulation-Scaneinheit, Radar-Scaneinheit, Sonar-Scaneinheit oder optische Scaneinheit ausgebildet sein. Damit können die Vorteile des jeweiligen Scanprinzips nutzbar gemacht werden.

Die Offenbarung betrifft des Weiteren ein System, welches eine Werkzeugmaschine und eine im Bearbeitungsfluss vor der Werkzeugmaschine vorgesehene Scanstation aufweist. Die Scanstation weist eine Scaneinheit für das Abscannen zumindest eines Werkstücks und/oder Werkzeugs auf. Die Scaneinheit erstellt ein dreidimensionales Datenmodell mit zumindest einem der Elemente, wie dem Werkstück im Bearbeitungsraum. Außerdem ist ein Speicher zum Speichern des Datenmodells vorgesehen. Eine Bilddatenaufbereitungseinheit erhält während der Bearbeitung kontinuierlich die jeweiligen Lageinformation/en von Werkstück und/oder Werkzeug. Die Bilddatenaufbereitungseinheit aktualisiert das dreidimensionale Datenmodell aus dem Speicher kontinuierlich mit der/den Lageinformation/en und zeigt das so aktualisierte, virtuelle Bild von Werkstück und/oder Werkzeug auf einer Anzeigeeinheit an.

Mittels eines solchen Systems können die weiter oben beschriebenen Vorteile eines Abscannens beim Bearbeiten eines Werkstücks nutzbar gemacht werden. Unter der Anordnung der Scanstation im Bearbeitungsfluss vor der Werkzeugmaschine kann dabei insbesondere verstanden werden, dass bei einem üblichen Bearbeitungsfluss ein Werkstück und/oder Werkzeug zunächst die Scanstation durchläuft, dort typischerweise abgescannt wird, und dann in den Bearbeitungsraum eingebracht wird. Beispielsweise kann die Scanstation räumlich vor einer Öffnung des Bearbeitungsraums angeordnet sein.

Das dreidimensionale Datenmodell kann insbesondere das Werkstück und/oder das Werkzeug beinhalten. Unter einer Aktualisierung kann insbesondere verstanden werden, dass mittels der Lageinformationen berechnet wird, wie sich Werkstück und/oder Werkzeug tatsächlich hinsichtlich ihrer Lage verändern, so dass diese Veränderung auch im Datenmodell berücksichtigt wird.

In diesem Zusammenhang wird insbesondere darauf hingewiesen, dass alle im Bezug auf die Vorrichtung, hier also insbesondere die Werkzeugmaschine und/oder das System, beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar sind und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in Ausführungsbeispielen schematisch dargestellt. Es zeigen:
- Fig. 1
- eine Werkzeugmaschine gemäß der Erfindung,
- Fig. 2
- ein System gemäß der Erfindung,
- Fig. 3
- eine Werkzeugmaschine gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

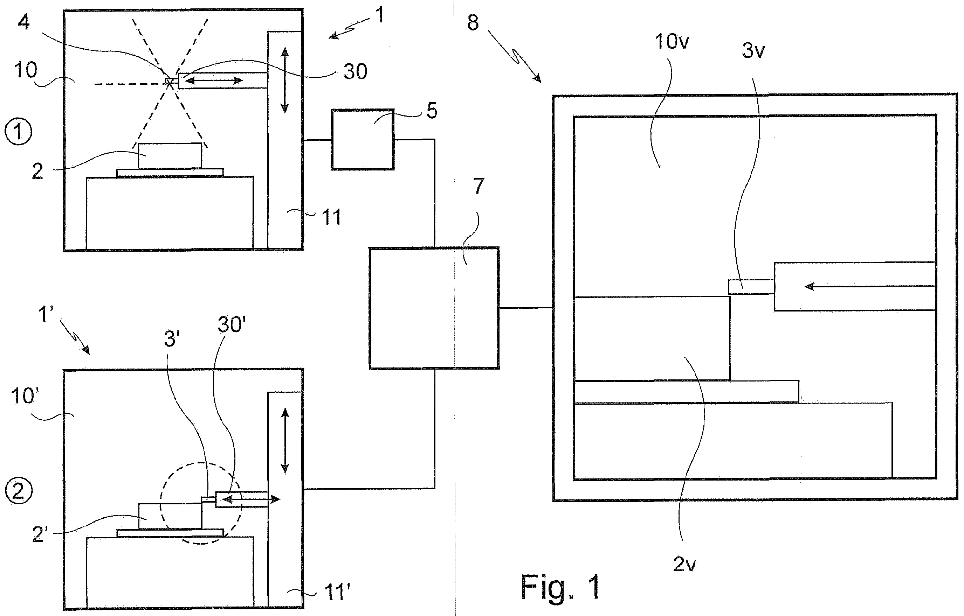

Figur 1 zeigt eine Werkzeugmaschine 1 gemäß einem Ausführungsbeispiel der Erfindung. Die Werkzeugmaschine 1 ist dabei in zwei Zuständen dargestellt, wobei ein erster Zustand mit der eingekreisten Zahl 1 und ein zweiter Zustand mit der eingekreisten Zahl 2 dargestellt sind. Die Bezugszeichen, welche beim zweiten Zustand dargestellt sind, wurden zur besseren Unterscheidbarkeit mit einem Apostroph markiert. Sofern nachfolgend nicht speziell auf einen Zustand eingegangen wird, gelten die entsprechenden Ausführungen grundsätzlich für beide Zustände.

Die Werkzeugmaschine 1 (bzw. Werkzeugmaschine 1' im zweiten Zustand) weist einen Bearbeitungsraum 10 auf (bzw. Bearbeitungsraum 10' im zweiten Zustand). In diesem befindet sich insbesondere ein Werkstück 2 (bzw. Werkstück 2' im zweiten Zustand), welches mittels der Werkzeugmaschine 1 bearbeitet werden soll.

Die Werkzeugmaschine 1 weist einen Bewegungsantrieb 11 (bzw. Bewegungsantrieb 11' im zweiten Zustand) und einen damit verbundenen Werkzeugträger 30 (bzw. Werkzeugträger 30' im zweiten Zustand) auf. Der Bewegungsantrieb 11 ist dazu ausgebildet, den Werkzeugträger 30 zu halten und dreidimensional zu positionieren, also zu verschieben. Dabei sind in Figur 1 zwei mögliche Bewegungsrichtungen, nämlich in horizontaler Richtung und in vertikaler Richtung, gezeigt. Eine weitere Bewegungsrichtung steht quer zur Papierebene von Figur 1 . Dies erlaubt eine freie Platzierung des Werkzeugträgers 30 im Bearbeitungsraum 10.

Das Werkstück 2 liegt auf einer nicht näher beschriebenen Auflage auf. Dort ist es typischerweise fixiert und/oder eingespannt, so dass es selbst bei Ausübung eines Drucks durch ein Werkzeug seine Position exakt beibehält.

Im ersten Zustand ist in dem Werkzeugträger 30 eine Scaneinheit 4 aufgenommen. Diese Scaneinheit 4 ist dazu ausgebildet, den Bearbeitungsraum 10 der Werkzeugmaschine 1 vollständig und insbesondere einschließlich des Werkstücks 2 abzuscannen. Dabei können insbesondere die genauen Konturen des Werkstücks 2 erfasst werden. Hierzu kann insbesondere der Bewegungsantrieb 11 verwendet werden, mittels welchem die Scaneinheit 4 um das Werkstück 2 herum gefahren bzw. an unterschiedlichen Orten benachbart zum Werkstück 2 positioniert werden kann. Die gescannten Konturen des Werkstücks 2 können beispielsweise dazu verwendet werden, um das Werkstück 2 zu überprüfen. Beispielsweise können sie mit gespeicherten Solldaten verglichen werden. Etwaige Abweichungen können beispielsweise auf ein beschädigtes Werkstück oder ein falsches Werkstück hinweisen. Ein Abscannen des Bearbeitungsraums 10 kann insbesondere ebenfalls dazu verwendet werden, einen Vergleich mit Solldaten durchzuführen. Dadurch können beispielsweise Beschädigungen oder mögliche Gefahrenquellen wie Fremdkörper erkannt werden.

Die Scaneinheit 4 kann dabei nicht nur durch den Bewegungsantrieb 11 verfahren werden, sondern sie kann auch in dem Werkzeugträger 30 gedreht werden. Dies entspricht einer typischen Funktionalität eines solchen Werkzeugträgers 30, in welche beispielsweise auch Bohrer zum üblichen Bohren von Löchern eingesetzt werden können, die bei typischer Verwendung gedreht werden.

Die Scaneinheit 4 kann insbesondere allseitig scannen, was durch die drei gestrichelten Linien in Figur 1 , erster Zustand, dargestellt ist. Dies kann beispielsweise durch die eben erwähnte Drehbarkeit erreicht werden.

Das Abscannen des Werkstücks 2 erfolgt bevorzugt vor dem Beginn der Bearbeitung. Dies kann insbesondere in dem ersten Zustand von Figur 1 erfolgen. Damit können die für die Bearbeitung relevanten Daten, insbesondere zur weiter unten beschriebenen Visualisierung der Daten, gesammelt werden.

Die von der Scaneinheit 4 erzeugten Daten, welche insbesondere die Kontur des Werkstücks 2 und die Struktur des Bearbeitungsraums 10 wiedergeben, werden an einen Speicher 5 geliefert. Dies erfolgt vorliegend über eine elektrische Verbindung, welche über zusammenwirkende Kontaktflächen an der Scaneinheit 4 und an dem Werkzeugträger 30 hergestellt wird. Damit kann sowohl auf einen fehleranfälligen Stecker wie auch auf eine aufwändige kontaktlose Übertragung verzichtet werden.

Die in dem Speicher 5 gespeicherten Daten bilden insbesondere die Grundlage für eine Visualisierung des Bearbeitungsvorgangs, welche nachfolgend genauer beschrieben wird. In dem Speicher 5 können Daten zu unterschiedlichen Werkstücken, unterschiedlichen Bearbeitungszeitpunkten und/oder unterschiedlichen Werkzeugen gespeichert sein.

Eine Bilddatenaufbereitungseinheit 7 ist mir dem Speicher 5 kommunikativ verbunden. Die Bilddatenaufbereitungseinheit 7 ist dazu ausgebildet, die oben erwähnten Daten, welche von der Scaneinheit erzeugt wurden, auszulesen. Auf die Funktionalität der Bilddatenaufbereitungseinheit 7 wird weiter unten näher eingegangen.

Im zweiten Zustand, welcher wie weiter oben bereits erwähnt ebenfalls in Figur 1 dargestellt ist, erfolgt die tatsächliche Bearbeitung des Werkstücks 2. Hierfür wurde die Scaneinheit 4 durch ein Werkzeug 3 (bzw. Werkzeug 3') ausgetauscht, vorliegend in Form eines Bohrers, welcher in das Werkstück 2 Löcher bohren kann. Das Werkzeug 3 kann genauso wie weiter oben mit Bezug auf die Scaneinheit 4 beschrieben mittels des Bewegungsantriebs 11 dreidimensional durch den Bearbeitungsraum 10 bewegt werden und kann überdies gedreht werden, so dass ein üblicher Bohrvorgang ermöglicht wird.

Mittels der weiter oben beschriebenen Bilddatenaufbereitungseinheit 7 kann der Bearbeitungsprozess, bei welchem das Werkstück 2 mittels des Werkzeugs 3 bearbeitet wird, visualisiert werden. Hierzu dient auch eine Anzeigeeinheit 8 in Form eines Bildschirms. Dieser Bildschirm ist mir der Bilddatenaufbereitungseinheit 7 kommunikativ verbunden, so dass Bilddaten von der Bilddatenaufbereitungseinheit 7 zum Bildschirm übertragen und dort angezeigt werden können.

Die Bilddatenaufbereitungseinheit 7 ist auch kommunikativ mit dem Bewegungsantrieb 11 verbunden. Dadurch erhält die Bilddatenaufbereitungseinheit 7 laufend Informationen über Bewegungen, welche der Bewegungsantrieb 11 mit dem Werkzeug 3 ausführt.

Die Bilddatenaufbereitungseinheit 7 verwendet sowohl die aus dem Speicher 5 ausgelesenen Informationen wie auch die Informationen über Bewegungen von dem Bewegungsantrieb 11 zur Visualisierung des Bearbeitungsprozesses. Dabei kann beispielsweise eine bekannte Startposition des Werkzeugs 3 als Ausgangspunkt verwendet werden und relativ dazu Veränderungen in der Lage des Werkzeugs 3 anhand der Daten über Bewegungen von dem Bewegungsantrieb 11 berechnet werden.

Bezüglich des Werkstücks 2 stehen die von der Scaneinheit 4 erzeugten Daten über den Speicher 5 zur Verfügung. Dies bedeutet, dass die Bilddatenaufbereitungseinheit 7 über die Konturen des Werkstücks 2 im Ausgangszustand informiert ist.

Basierend auf den Daten über die Bewegung des Werkzeugs 3 berechnet die Bilddatenaufbereitungseinheit 7 laufend, ob es zu einem Kontakt zwischen dem Werkstück 2 und dem Werkzeug 3 kommt. Im Fall eines solchen Kontakts berechnet die Bilddatenaufbereitungseinheit 7 auch, wie das Werkstück 2 durch das Werkzeug 3 bearbeitet wird. Dies kann beispielsweise bedeuten, dass ein Eindringen des Werkzeugs 3 in das Werkstück 2 erkannt wird und an der entsprechenden Stelle von einem Entfernen von Material aus dem Werkstück 2 ausgegangen wird.

Basierend auf den oben erwähnten Informationen und den angestellten Berechnungen erstellt die Bilddatenaufbereitungseinheit 7 eine Visualisierung des Bearbeitungsvorgangs, welche auf der Anzeigeeinheit 8 angezeigt wird. Diese Visualisierung beinhaltet einen visualisieren Bearbeitungsraum 10v, ein visualisiertes Werkstück 2v und ein visualisiertes Werkzeug 3v. Dabei können auch Veränderungen der Lage des Werkzeugs 3v sowie Veränderungen der Kontur des Werkstücks 2v, hervorgerufen durch eine Bearbeitung mittels des Werkzeugs 3v, angezeigt werden. Dies erlaubt einem Benutzer eine visuelle Kontrolle des Bearbeitungsvorgangs in Echtzeit. Dabei ist hervorzuheben, dass die Daten über das Werkstück 2 nicht nur auf einer Annahme basieren, sondern auf unmittelbar vor der Bearbeitung gemessenen dreidimensionalen Daten, welche mittels der Scaneinheit 4 gewonnen wurden.

Mittels der beschriebenen Vorgehensweise ist es auch möglich, eine Vorausberechnung des Bearbeitungsvorgangs vorzunehmen. Hierzu kann eine Vorausberechnung der Bewegung des Werkzeugs 3 in ähnlicher Weise verwendet werden wie eine aufgrund erhaltener Daten berechnete bzw. ermittelte Bewegung des Werkzeugs 3. Dies ermöglicht es dem Bediener, das voraussichtliche Ergebnis eines bestimmten Bearbeitungsvorgangs im Voraus visuell anzusehen, bevor eine entsprechende Bearbeitung erfolgt. Beispielsweise kann mittels nicht dargestellter Eingabemittel seitens des Benutzers eine Auswahl getroffen werden, wie viele Sekunden oder Minuten im Voraus die geplante Bearbeitung angezeigt werden soll. Anhand entsprechender Bearbeitungsdaten, beispielsweise NC-Daten, kann die Bilddatenaufbereitungseinheit 7 dann die zu erwartende Bewegung des Werkzeugs 3 vorausberechnen und eine daraus resultierende Bearbeitung des Werkstücks 2 ebenfalls vorausberechnen. Entsprechend können die Darstellungen des visualisieren Werkstücks 2v und des visualisieren Werkzeugs 3v angepasst werden, so dass der Benutzer die zu erwartende Bearbeitung erkennen kann.

Wenn der Benutzer beispielsweise erkennt, dass die geplante bzw. vorausberechnete Bearbeitung des Werkstücks 2 zu einem unerwünschten Ergebnis führen würde, so kann der Benutzer rechtzeitig eingreifen und beispielsweise den Bearbeitungsvorgang beenden oder ändern.

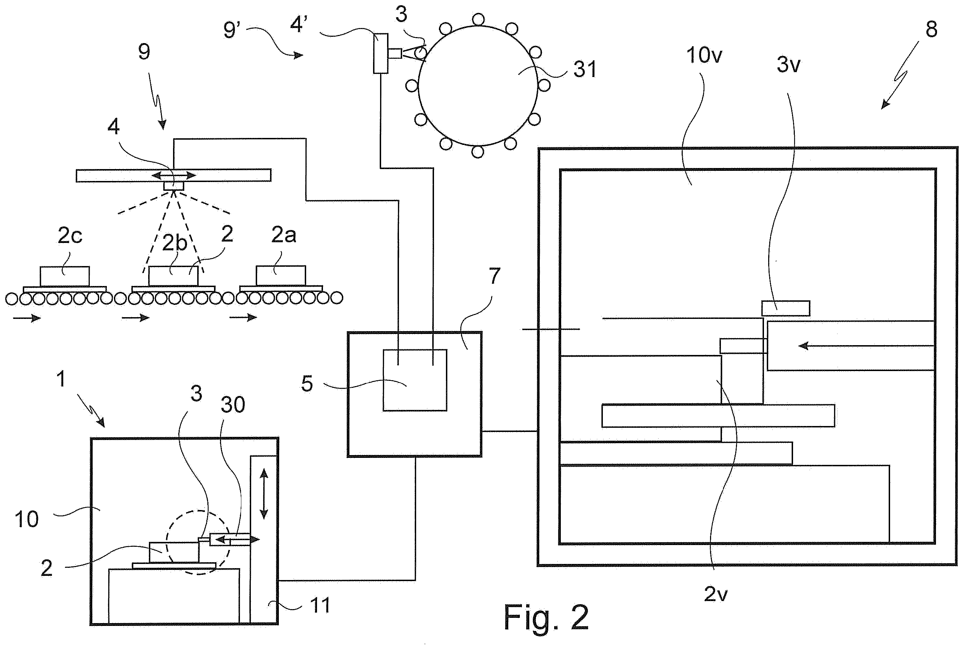

Figur 2 zeigt ein System gemäß der Erfindung, welches eine Werkzeugmaschine 1 und eine Scanstation 9 aufweist. Die Werkzeugmaschine 1 ist in ähnlicher Weise wie weiter oben mit Bezug auf Figur 1 beschrieben ausgebildet. Insbesondere weist sie einen Werkzeugträger 30 auf, in welchen sowohl ein Werkzeug 3 wie auch eine Scaneinheit 4 eingesetzt werden kann. Ebenso wie bei der Ausführung gemäß Figur 1 kann über nicht dargestellte Kontaktflächen eine elektrische Verbindung zwischen der Scaneinheit 4 und einem Speicher 5 hergestellt werden.

Der Speicher 5 ist vorliegend nicht extern zur Bilddatenaufbereitungseinheit 7 angeordnet, sondern ist in diese integriert. Dies ändert nichts an den weiter oben beschriebenen Funktionalitäten.

Die Scanstation 9 ist dazu ausgebildet, Werkstücke 2 bereits vor der Bearbeitung, insbesondere vor deren Einbringen in die Werkzeugmaschine 1 zu scannen und damit deren Konturen zu erfassen. Hierzu weißt die Scanstation 9 eine Scaneinheit 4 auf, welche in ähnlicher Weise ausgebildet ist wie die bereits weiter oben mit Bezug auf Figur 1 beschriebene Scaneinheit 4.

Vorliegend sind drei Werkstücke 2 gezeigt, nämlich ein erstes Werkstück 2a, ein zweites Werkstück 2b und ein drittes Werkstück 2c. Diese Werkstücke 2 werden auf einem schematisch dargestellten Förderband unter der Scaneinheit 4 hindurchgefahren, wobei deren Konturen mittels der Scaneinheit 4 erfasst werden.

Die Scaneinheit 4 der Scanstation 9 ist mit dem Speicher 5 verbunden, so dass von der Scaneinheit 4 erfasste Daten in den Speicher 5 geschrieben werden können und von der Bilddatenaufbereitungseinheit 7 in ähnlicher Weise wie oben beschrieben verarbeitet werden können.

Bei der Ausführung von Figur 2 erfolgt also eine räumliche Trennung zwischen dem Scanvorgang und dem Bearbeitungsvorgang. Ein Abscannen des zu bearbeitenden Werkstücks 2 erfolgt außerhalb des Bearbeitungsraums 10. Erst nach dem Abscannen wird das jeweilige Werkstück 2 in den Bearbeitungsraum 10 eingebracht. Im Normalfall kann somit ein Abscannen innerhalb des Bearbeitungsraums 10 unterbleiben, was insbesondere Zeit einspart.

Typischerweise wird das jeweilige Werkstück 2 im Bearbeitungsraum 10 eine definierte Position gebracht, so dass die Bilddatenaufbereitungseinheit 7 eine Visualisierung und Vorausberechnung des Bearbeitungsvorgangs in sehr ähnlicher Weise wie weiter oben mit Bezug auf Figur 1 beschrieben ausführen kann.

Das System von Figur 2 weist ferner eine weitere Scanstation 9' auf. Diese dient zum Einscannen von unterschiedlichen Werkzeugen 3.

Dabei ist schematisch dargestellt, dass eine Mehrzahl von Werkzeugen 3 an einer Trommel 31 befestigt sind. Dies ermöglicht ein einfaches und automatisiertes Bevorraten sowie Auswählen von Werkzeugen 3 zur Bearbeitung innerhalb des Bearbeitungsraums 10. Die weitere Scanstation 9' weißt eine weitere Scaneinheit 4' auf, welche dazu ausgebildet ist, Werkzeuge 3 in der Trommel 31 oder beim Herausnehmen aus der Trommel 31 abzuscannen. Damit können die Konturen des jeweiligen Werkzeugs 3 bestimmt werden. Dies liefert einerseits Ausgangsdaten für die in der Bilddatenaufbereitungseinheit 7 durchzuführende Berechnung. Andererseits kann damit durch Vergleich mit vorherigen, auf Scanvorgängen basierenden Daten oder mit Solldaten eine etwaige Veränderung des jeweiligen Werkzeugs 3 erkannt werden, welche beispielsweise auf Beschädigungen oder Abnutzung beruhen kann. Wenn derartige Abweichungen erkannt werden kann das Werkzeug 3 beispielweise entsorgt werden. Es kann auch einer Nachbearbeitung zugeführt werden.

Mittels der in Figur 2 gezeigten Ausführung kann in sehr ähnlicher Weise wie weiter oben mit Bezug auf Figur 1 beschrieben eine Visualisierung eines Bearbeitungsvorgangs durchgeführt werden. Dabei wird typischerweise auf die außerhalb des Bearbeitungsraum 10 gewonnenen Daten zurückgegriffen, so dass ein Scanvorgang innerhalb des Bearbeitungsraum 10 typischerweise entfallen kann. Damit wird insgesamt Zeit gespart, was einen höheren Durchsatz der Werkzeugmaschine 1 ermöglicht.

Es sei jedoch verstanden, dass auch in der in Figur 2 gezeigten Ausführung eine Scaneinheit 4 in den Werkzeugträger 30 eingesetzt werden kann, so dass ein Abscannen innerhalb des Bearbeitungsraums 10 in ähnlicher Weise wie weiter oben mit Bezug auf Figur 1 beschrieben durchgeführt werden kann.

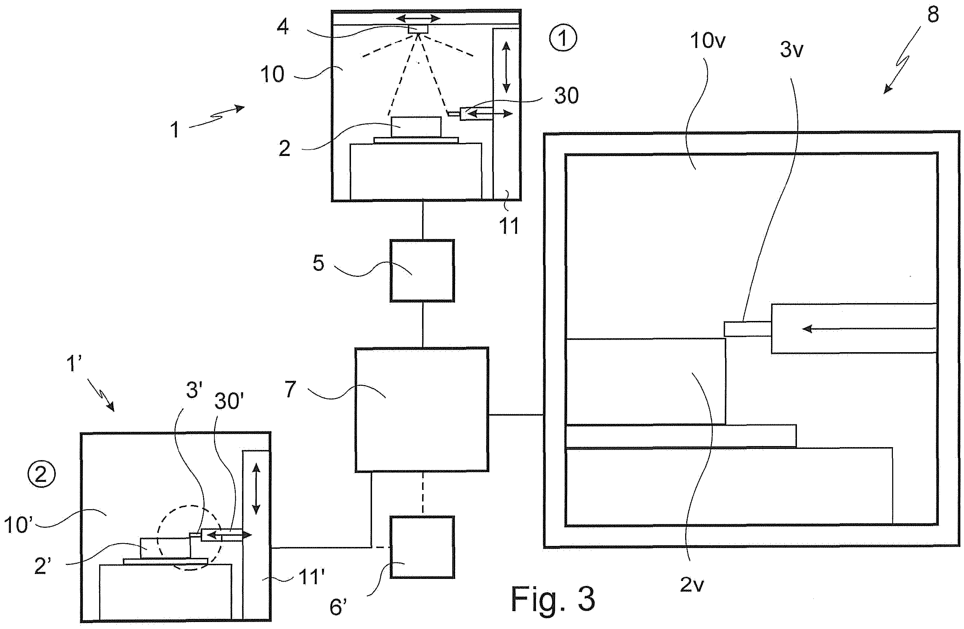

Figur 3 zeigt eine Werkzeugmaschine 1, welche eine alternative Ausführung im Vergleich zur in Figur 1 dargestellten Werkzeugmaschine 1 darstellt. Bei der Ausführung gemäß Figur 3 wird die Scaneinheit 4 nicht von dem Werkzeugträger 30 gehalten, sondern ist vielmehr verschiebbar obenseitig in dem Bearbeitungsraum 10 an der Decke montiert. Dabei kann die Scaneinheit 4 derart verschoben werden, dass ein Abscannen des gesamten Bearbeitungsraums 10 möglich ist. Damit kann darauf verzichtet werden, vor einem Bearbeitungsvorgang zunächst eine Scaneinheit 4 in den Werkzeugträger 30 einzuspannen und nach dem Scannen auf ein Werkzeug 3 zu wechseln. Dies kann insbesondere die Bearbeitungszeit verringern. Außerdem kann sich bei der Ausführung nach Figur 3 die Scaneinheit 4 entlang einer vorgegebenen Linie bewegen, so dass insbesondere in dem Fall, in welchem gleichzeitig ihre Position gemessen wird, unabhängig von dem Bewegungsantrieb 11 eine besonders exakte Position der Scaneinheit 4 ermittelt werden kann.

Typischerweise wird bei der Ausführung von Figur 3 zunächst das Werkstück 2 in den Bearbeitungsraum 10 eingebracht und dann der Bearbeitungsraum 10 samt dem Werkstück 2 mittels der Scaneinheit 4 vermessen. Dabei wird die Scaneinheit 4 typischerweise über eine gewisse Strecke bewegt. Die dabei erfassten Daten werden wie bereits bei den anderen Ausführungen beschrieben in einem Speicher 5 gespeichert, auf welchen wiederum die Bilddatenaufbereitungseinheit 7 zugreifen kann. Diese erhält wiederum auch Daten über die Bewegungen von dem Bewegungsantrieb 11, so dass die weiter oben beschriebene Visualisierung vorteilhaft durchgeführt werden kann.

Der Zustand während des Abscannens ist in Figur 3 - ähnlich wie bei Figur 1 - als erster Zustand mit der Zahl 1 in einem Kreis bezeichnet. Der Zustand während der Bearbeitung ist demgegenüber als zweiter Zustand mit der Zahl 2 in einem Kreis bezeichnet.

Eine Bilddatenaufbereitungseinheit 7 wird während der Bearbeitung kontinuierlich mit den jeweilige/n Lageinformation/en von Werkstück 2 und/oder Werkzeug 3 versorgt. Hierfür dient eine Lageüberwachungseinheit 6', die zum Beispiel ein Teil der Maschinensteuerung der Werkzeugmaschine 1 ist.

## Patentansprüche

1. Verfahren zur Darstellung der Bearbeitungsabläufe im Bearbeitungsraum (10) einer Werkzeugmaschine (1), in welchem eine Bearbeitung eines Werkstücks (2) mittels eines Werkzeugs (3) durch Bewegung des Werkzeugs (3) relativ zum Werkstück (2) erfolgt,
a. wobei vor Bearbeitungsbeginn eine Scaneinheit (4) zumindest das Werkstück (2) und/oder das Werkzeug (3) abscannt und
b. von dem in Schritt a. abgescannten Gegenstand ein dreidimensionales Datenmodell erstellt wird, wobei im Fall des abgescannten Werkstücks (2) das Datenmodell um vorhandene Daten der Kontur des Werkzeugs (3) ergänzt wird und im Fall des abgescannten Werkzeugs (3) das Datenmodell um vorhandene Daten der Kontur des Werkstücks (2) ergänzt wird,
c. das in Schritt b. erstellte Modell in einem Speicher (5) gespeichert wird und
d. während der Bearbeitung des Werkstücks (2), welche einhergeht mit einer relativen Lageänderung von Werkstück (2) und Werkzeug (3), die jeweilige/n Lageinformation/en von Werkstück (2) oder Werkzeug (3) oder Werkstück (2) und Werkzeug (3) einer Bilddatenaufbereitungseinheit (7) kontinuierlich zugeleitet wird/werden, und
e. die Bilddatenaufbereitungseinheit (7) das in Schritt b. erstellte dreidimensionale Datenmodell aus dem Speicher (5) kontinuierlich mit den in Schritt d. zugeleiteten Lageinformation/en aktualisiert und, basierend auf dem Datenmodell, ein virtuelles Bild erzeugt, und
f. das so aktualisierte, virtuelle Bild von Werkstück (2) und Werkzeug (3), auf einer Anzeigeeinheit (8) anzeigt.

2. Verfahren nach Anspruch 1, **dadurch gekennzeichnet, dass** zumindest ein Lagesensor für die Erfassung der jeweiligen Lage von Werkstück (2) und/oder Werkzeug (3) vorgesehen ist, welcher die jeweilige/n Lageinformation/en ermittelt und kontinuierlich der Bilddatenaufbereitungseinheit (7) zuleitet.

3. Verfahren nach einem der vorhergehenden Ansprüche, **dadurch gekennzeichnet, dass** an der Anzeigeeinheit (8) auswählbar ist, aus welcher Blickrichtung und/oder in welcher Schnittebene das virtuelle Bild angezeigt werden soll und die Bilddatenaufbereitungseinheit (7) aus dieser Auswahlinformation das Datenmodell entsprechend aufbereitet und auf der Anzeigeeinheit (8) anzeigt.

4. Verfahren nach einem der vorhergehenden Ansprüche, **dadurch gekennzeichnet, dass** neben der aktuellen Situation im Bearbeitungsraum (10) auf der Anzeigeeinheit (8) eine zu einem in der Zukunft liegenden Zukunftszeitpunkt stattfindende Situation im Bearbeitungsraum (10) durch Auswahl darstellbar ist, wobei in diesem Modus der/die jeweilige/n aktuelle/n Geschwindigkeitsvektor/en des/der im Bearbeitungsraum (10) bewegten Elemente/s ermittelt wird/werden und hieraus für den Zukunftszeitpunkt aus dem Datenmodell eine zukünftige Situation ermittelt und auf der Anzeigeeinheit (8) angezeigt wird.

5. Verfahren nach einem der vorhergehenden Ansprüche, **dadurch gekennzeichnet, dass** als Werkzeugmaschine (1) eine eine Motorspindel aufweisende, spanabhebende Werkzeugmaschine vorgesehen ist, die Motorspindel ein Werkzeug für einen zumindest rotativen Antrieb aufnimmt, und die Motorspindel auch zur Aufnahme einer Scaneinheit (4) ausgebildet ist, wobei die Scaneinheit (4) insbesondere bei Rotation und/oder Bewegung der Motorspindel scannt.

## Claims

1. Method for representing the machining operations in the machining area (10) of a machine tool (1), in which machining of a workpiece (2) is carried out by means of a tool (3) through movement of the tool (3) relative to the workpiece (2),
a. wherein, before beginning machining, a scanning unit (4) scans at least the workpiece (2) and/or the tool (3), and
b. a three-dimensional data model is created of the object scanned in step a., wherein in the case of the scanned workpiece (2) the data model is supplemented by existing data on the contour of the tool (3) and in the case of the scanned tool (3) the data model is supplemented by existing data on the contour of the workpiece (2),
c. the model created in step b. is stored in a memory (5) and
d. during the machining of the workpiece (2), which is accompanied by a relative change in position of workpiece (2) and tool (3), the respective position information of workpiece (2) or tool (3), or workpiece (2) and tool (3), is continuously fed to an image data processing unit (7), and
e. the image data processing unit (7) continuously updates the three-dimensional data model created in step b. from the memory (5) with position information supplied in step d. and generates a virtual image based on the data model, and
f. the virtual image of workpiece (2) and tool (3) updated in this way, is displayed on a display unit (8).

2. Method according to claim 1, **characterised in that** at least one position sensor is provided for detecting the respective position of workpiece (2) and/or tool (3), which determines the respective position information and feeds it continuously to the image data processing unit (7).

3. Method according to one of the preceding claims, **characterised in that** it is possible to select, on the display unit (8), from which viewing direction and/or in which cutting plane the virtual image should be displayed and the image data processing unit (7) processes the data model according to this selection information and displays it on the display unit (8).

4. Method according to one of the preceding claims, **characterised in that** in addition to the current situation in the machining area (10), a situation in the processing area (10) occurring at a future point in time can be displayed on the display unit (8) by selection, wherein in this mode the respective current speed vector(s) of the element(s) moved in the machining area (10) is/are determined and a future situation is determined from this for the future point in time from the data model, and is displayed on the display unit (8).

5. Method according to one of the preceding claims, **characterised in that** a cutting machine tool having a motor spindle is provided as machine tool (1), the motor spindle receives a tool for at least one rotary drive, and the motor spindle is also designed to receive a scanning unit (4), wherein the scanning unit (4) scans, in particular, during rotation and/or movement of the motor spindle.

## Revendications

1. Procédé de représentation des séquences d'usinage dans l'espace d'usinage (10) d'une machine-outil (1), dans laquelle un usinage d'une pièce (2) est effectué au moyen d'un outil (3) par déplacement de l'outil (3) par rapport à la pièce (2),
a. dans lequel avant le début d'usinage une unité de scannage (4) scanne au moins la pièce (2) et/ou l'outil (3) et
b. un modèle de données en trois dimensions est établi par l'objet scanné à l'étape a., dans lequel dans le cas de la pièce (2) scannée, le modèle de données est complété par des données présentes du contour de l'outil (3) et dans le cas de l'outil (3) scanné, le modèle de données est complété par des données présentes du contour de la pièce (2),
c. le modèle établi à l'étape b. est enregistré dans une mémoire (5) et
d. pendant l'usinage de la pièce (2) qui s'accompagne d'une modification de position relative de la pièce (2) et de l'outil (3) la/les information(s) de position respective(s) de la pièce (2) ou de l'outil (3) ou de la pièce (2) et de l'outil (3) est/sont transmise(s) en continu à une unité de préparation de données d'image (7), et
e. l'unité de préparation de données d'image (7) actualise le modèle de données en trois dimensions établi à l'étape b. à partir de la mémoire (5) en continu avec la/les information(s) transmise(s) à l'étape d. et, sur la base du modèle de données, génère une image virtuelle, et
f. affiche l'image virtuelle, ainsi actualisée de la pièce (2) et de l'outil (3) sur une unité d'affichage (8).

2. Procédé selon la revendication 1, **caractérisé en ce qu'**au moins un capteur de position est prévu pour la détection de la position respective de la pièce (2) et/ou de l'outil (3), lequel détermine la/les information(s) de position respective(s) et la/les transmet en continu à l'unité de préparation de données d'image (7).

3. Procédé selon l'une des revendications précédentes, **caractérisé en ce qu'**il peut être sélectionné au niveau de l'unité d'affichage (8), le sens de vision à partir duquel et/ou le plan de coupe dans lequel l'image virtuelle doit être affichée et l'unité de préparation de données d'image (7) prépare en conséquence à partir de cette information de sélection le modèle de données et l'affiche sur l'unité d'affichage (8).

4. Procédé selon l'une des revendications précédentes, **caractérisé en ce qu'**outre la situation actuelle dans l'espace d'usinage (10) sur l'unité d'affichage (8) une situation ayant lieu à un moment futur se trouvant dans le futur peut être représentée dans l'espace d'usinage (10) par sélection, dans lequel dans ce mode le(s) vecteur(s) de vitesse actuel(s) respectif(s) du/des élément(s) déplacé(s) dans l'espace d'usinage (10) est/sont déterminé(s) et à partir de là une situation future est déterminée pour le moment futur à partir du modèle de données et est affichée sur l'unité d'affichage (8).

5. Procédé selon l'une des revendications précédentes, **caractérisé en ce que** comme machine-outil (1) une machine-outil enlevant les copeaux, présentant une broche de moteur est prévue, la broche de moteur reçoit un outil pour un entraînement au moins rotatif, et la broche de moteur est aussi réalisée pour la réception d'une unité de scannage (4), dans lequel l'unité de scannage (4) réalise un scannage en particulier lors de la rotation et/ou le mouvement de la broche de moteur.
